Europäisches Patentamt

European Patent Office

Office européen des brevets

(11) Publication number: **0 200 400**
**B1**

## EUROPEAN PATENT SPECIFICATION

(45) Date of publication of patent specification: **21.09.88**

(51) Int. Cl.⁴: **F 16 B 19/10**

(21) Application number: **86302669.6**

(22) Date of filing: **10.04.86**

(54) Sheathed composite blind rivet.

(30) Priority: **26.04.85 US 727781**

(43) Date of publication of application:
**05.11.86 Bulletin 86/45**

(45) Publication of the grant of the patent:
**21.09.88 Bulletin 88/38**

(84) Designated Contracting States:
**DE FR GB IT**

(56) References cited:
**FR-A-1 491 499**
**FR-A-2 519 100**
**US-A-2 410 398**
**US-A-3 613 495**
**US-A-3 641 865**
**US-A-4 010 519**
**US-A-4 405 256**
**US-A-4 478 544**

(73) Proprietor: **MICRODOT INC.**
**23 Old Kings Highway South**
**Darien Connecticut 06820 (US)**

(72) Inventor: **Berecz, Imre**
**26562 Shane Drive**
**El Toro Californnia 92630 (US)**
Inventor: **Schultz, Dennis**
**4150 Schaefer Avenue**
**22 Chino California 917, 91710 (US)**
Inventor: **Hinton, Dennis L.**
**19711 Larkfield Plaza**
**Yorba Linda California, 92686 (US)**

(74) Representative: **Williams, Trevor John et al**
**J.A. KEMP & CO. 14 South Square Gray's Inn**
**London WC1R 5EU (GB)**

Courier Press, Leamington Spa, England.

## Description

The blind rivet of the instant invention is an improvement on the composite rivet disclosed in our prior US—A—4 478 544 which forms the basis for the prior art portion of claim 1.

Carbon fibre reinforced materials are now widely used in the aircraft industry for airframe structural components. However, the use of carbon fibre reinforced resins in blind rivets has been limited by the difficulty of properly forming the blind head. One characteristic of composite materials utilising carbon fibres is that the material often exhibits a rough finish after reforming due to protrusion or breakage of the carbon fibres. While structural integrity of the material may not be compromised, the end product is abrasive and aesthetically unsatisfactory. When such material is employed in the reformable head of a blind rivet, the problem becomes acute since the blind head is exposed on the rear surface of the workpiece.

Another problem that must be addressed is that plastic cold flow of the rivet tends to reduce clamp-up forces on a workpiece. Thus, pretensioning of the rivet is highly desirable to offset ultimate relaxation of the tensile forces.

The aforesaid problems are solved by the rivet of the present invention as characterised in claim 1 in that the carbon fibres and resin matrix of the blind head thereof are encapsulated in a tensioned sheath. The sheath is so formed as to control deflection and projection of the carbon fibres upon formation of the rivet head and to aid in creating and maintaining pretension on the rivet. In both disclosed embodiments of the invention, compression of the resin matrix, which is softened due to the application of heat, forms a radially extending rivet head that is integral with the shear portion of the rivet and which, when fully polymerised, forms a riveted connection that exhibits relatively high shear strength. The configuration of the sheath and the mandrel of the rivet aids the maintenance of clamp-up forces and ensures that the blind head portion of the carbon fibre reinforced matrix of the rivet is entirely covered and protected by the sheath.

Brief description of the accompanying drawings

Figure 1 is an elevational view, partially in cross section, of one embodiment of the blind rivet of the instant invention;

Figure 2 is a view of the rivet of Figure 1 after tensioning of the rivet mandrel to form a blind head on the rivet;

Figure 3 is a view similar to Figure 1 of another embodiment of the instant invention; and

Figure 4 is a view of the rivet of Figure 3 after tensioning of the mandrel thereof to form a blind head on the rivet.

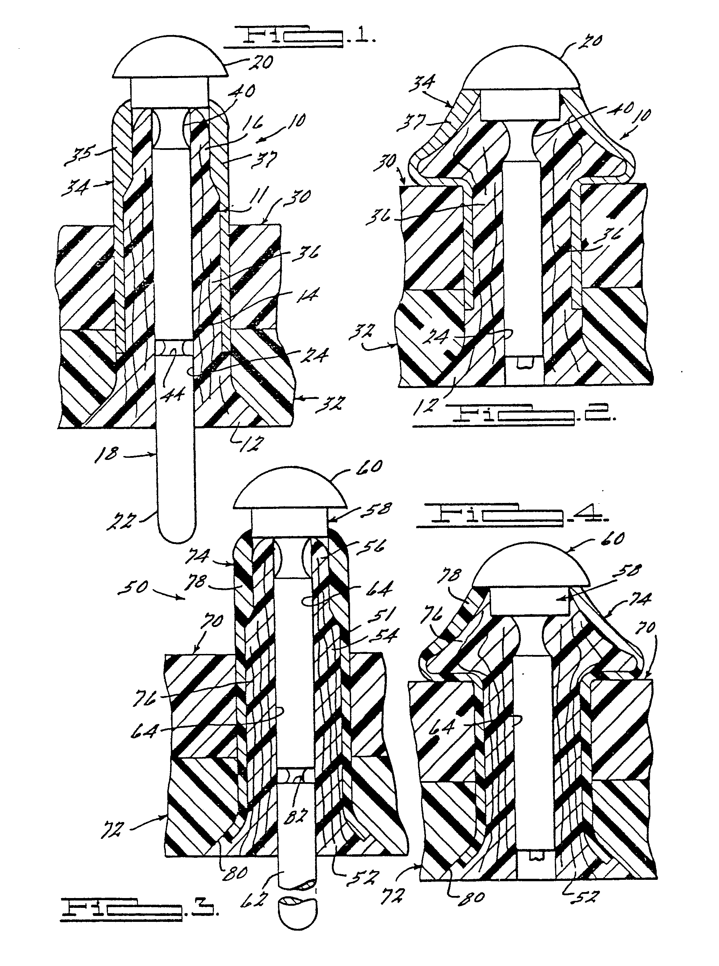

As best seen in Fig. 1 of the drawings, a rivet 10 in accordance with a constructed embodiment of the instant invention comprises a carbon fibre-reinforced resin matrix, preferably a "B"-stage thermoset resin preform 11 having a head portion 12, a shear portion 14, and a blind head forming portion 16. A mandrel 18 is disposed centrally of the preform 11 and has an anvil 20 at one end thereof and a tensioning stem 22 at the other end thereof. The mandrel 18 is journalled in a complementary aperture 24 that extends through the head, shear and head forming portions 12, 14 and 16, respectively, of the preform 11. The shear portion 14 of the rivet 10 is coextensive with the cumulative thickness of a pair of workpieces 30 and 32.

As seen in Fig. 2 of the drawings, the mandrel 18 is adapted to be pulled, after heating of the preform 11, by a tool (not shown) of conventional design resulting in deformation of head forming portion 16 of the rivet 10 into the mushroom configuration shown.

In accordance with one feature of the instant invention, the head forming portion 16, of the rivet 10 is encapsulated by a sheath 34, preferably Titanium or suitable plastic, which expands to the configuration of the blind head and completely covers said head eliminating protrusion of carbon fibers 36 that are impregnated or encapsulated in the resin matrix. The sheath 34 has a uniform external diameter prior to deformation but has an upper end portion 37 of reduced internal diameter that controls collapse and maintains a bias on the reformed resin matrix after deformation. It is to be noted that the thickened wall section 37 commences well above the workpiece 30 whereby the relatively thin section thereof accommodates radial deflection of the sheath 34 and helps define the ultimate truncated conical cross section of the upper portion 37 thereof.

From the foregoing it should be apparent that a smooth exterior surface is presented on the blind head which is not abrasive and is aesthetically pleasing. The sheath 34 is mechanically collapsed by the anvil portion 20 of the mandrel 18 in a manner that maintains the clamp-up force of the rivet 10 in the event of plastic cold flow of the shear portion 14 thereof.

The mandrel 18 is provided with an annular groove 40 in the stem 22 thereof into which resin flows thereby tensioning the mandrel and locking it within the head forming portion 16 of the rivet 10. A breakoff groove 44 is provided in the stem 22 to facilitate removal of excess stem portion after setting of the rivet 10.

As seen in Figs. 3 and 4 of the drawings, a rivet 50 comprises a carbon fibre reinforced preform 51, preferably a "B"-stage thermoset resin, having a head portion 52 of any desired configuration, a shear portion 54, and a blind head forming portion 56. A centrally disposed mandrel 58 has a head or anvil 60 at one end thereof and a tensioning stem 62 at the other end thereof. The mandrel 58 is journalled in a complementary aperture 64 that extends through the head, shear and head forming portions 52, 54 and 56, respectively, of the rivet 50. The shear portion 54 of the rivet 50 is coextensive with the cumulative thickness of a pair of workpieces 70 and 72.

As seen in Fig. 4 of the drawings, the mandrel 58 is adapted to be pulled, after heating of the preform 51, by a tool (not shown) resulting in deformation of the head forming portion 56 of the rivet 50 into the mushroom configuration shown.

The head forming portion 56, of the rivet 50, is encapsulated by a plastic sheath 74 which expands to the configuration of the blind head eliminating protrusion of carbon fibers 76 that are impregnated or encapsulated in the resin matrix. The sheath 74 has a thickened upper end portion 78 that effects controlled deformation thereof and is reformed into a conical configuration that maintains pretension on the rivet 50. It is to be noted that the sheath 74 extends entirely through the workpiece 70 and into a counterbore 80 in the workpiece 72. Thus, plastic cold flow of the shear portion 54 of the rivet 50 will not effect a reduction in clamp-up force of the rivet 50 since tension induced by deformation of the sheath 74 will continue to pinch the workpieces 70 and 72. A breakoff groove 82 is provided in the stem 62 to facilitate removal of the excess stem portion after setting of the rivet 50.

## Claims

1. A composite blind rivet for joining a pair of workpieces (30, 32) having aligned apertures therein, said rivet comprising a tubular composite body comprising a plurality of substantially continuous carbon fibres (36) encapsulated in a heat deformable resin matrix, said tubular body having a preformed head portion (12) of a first diameter, a shear portion (14) of a second diameter relatively smaller than the first diameter and connected thereto by a radially extending shoulder, and a blind head forming portion (16), a mandrel (18) extending centrally of said tubular body and having a stem portion (22) at one end and an anvil (20) at the other end overlying said blind head forming portion of the tubular body, said mandrel being movable axially relative to the shear portion (14) and preformed head portion (R) of the tubular body to form a blind head thereon, and a unitary ductile sheath (34) having an end portion underlying the anvil portion of the mandrel, and a tubular portion adapted to extend into and be radially aligned with the apertures in the workpieces, the sheath being deformable due to axial compression by the anvil on the mandrel to a radially enlarged configuration, characterised in that the head forming portion (16) of the tubular body has an end portion of a third diameter relatively smaller than the diameter of the shear portion (14) and connected to the shear portion by a truncated conical section that is convergent towards the anvil on the mandrel, the sheath has a radially enlarged end portion underlying the anvil portion of the mandrel, the tubular portion of the sheath adapted to extend into the apertures of the workpieces, being relatively thin and having an end portion seated on the radial shoulder between the head (12) and shear (14) portions of the tubular body, the conical section, as well as the enlarged end portion and part of the thin tubular portion of the sheath being deformable due to axial compression between the anvil and the radial shoulder on the tubular body portion to a radially enlarged truncated conical configuration that is stressed so as to exert a radially inward bias on the deformed plastic head of the tubular body, said sheath fully covering the blind head forming portion of the rivet after deformation thereof as to preclude protrusion of fibres from the blind head.

2. A rivet in accordance with claim 1, wherein said sheath is metal.

3. A rivet in accordance with claim 1, wherein said sheath is plastic.

## Patentansprüche

1. Zusammengesetzter Blindniet zum Verbinden eines Paares Werkstücke (30, 32), die sich deckende Löcher aufweisen, wobei der Niet ein rohrförmiges zusammengesetztes Hauptteil mit einer Vielzahl von im wesentlichen endlosen Kohlenstofffasern (36) umfaßt, die in einer warmverformbaren Harzmatrix eingekapselt sind, dabei das rohrförmige Hauptteil einen vorgeformten Kopfabschnitt (12) von einem ersten Durchmesser hat, einen Scherabschnitt (14) von einem zweiten Durchmesser, der relativ kleiner ist als der erste Durchmesser, und mit ihm durch eine radiale Schulter verbunden, und einen einen Blindkopf bildenden Abschnitt (16), einen Dorn (18), der sich in der Mitte des rohrförmigen Hauptteils erstreckt und einen Schaftabschnitt (22) an einem Ende und einen über dem dem Blindkopf bildenden Abschnitt angeordneten Amboß (20) am anderen Ende aufweist, wobei der Dorn axial in bezug auf den Scherabschnitt (14) und den vorgeformten Kopfabschnitt (4) des rohrförmigen Hauptteils so bewegbar ist, daß sich daran ein Blindkopf ausbildet, und eine einteilige verformbare Hülle (34) mit einem unter dem Amboßabschnitt des Dorns angeordneten Endabschnitt und einem rohrförmigen Abschnitt, der in die Löcher in den Werkstücken einzudringen und eine radiale Deckungsstellung mit ihnen einzunehmen vermag, wobei die Hülle infolge axialer Kompression durch den Amboß auf dem Dorn in eine radial vergrößerte Konfiguration verformbar ist, dadurch gekennzeichnet, daß der den Kopf bildende Abschnitt (16) des rohrförmigen Hauptteils einen Endabschnitt von einem dritten Durchmesser hat, der relativ kleiner als der Durchmesser des Scherabschnitts (14) ist und mit dem Scherabschnitt durch einen kegelstumpfförmigen Abschnitt verbunden ist, der sich zum Amboß auf dem Dorn hin verjüngt, die Hülle einen unter dem Amboßabschnitt des Dorns angeordneten radial vergrößerten Endabschnitt hat, der rohrförmige Abschnitt der Hülle, der in die Löcher der Werkstükke einzudringen vermag, relativ dünn ist und einen an der radialen Schulter zwischen dem Kopfabschnitt (12) und dem Scherabschnitt (14) des rohrförmigen Hauptteils anliegt, wobei der kegelige Abschnitt ebenso wie der vergrößerte Endabschnitt und ein Teil des dünnen rohrförmigen Abschnitts der Hülle infolge axialer Kompression zwischen dem Amboß und der radialen Schulter am rohrförmigen Hauptteil in eine radial vergrößerte kegelstumpfförmige Konfiguration verformbar ist, welche so beansprucht wird, daß sie auf den verformten Kopf aus Kunststoff des rohrförmigen Hauptteils eine radial nach innen gerichtete Vorspannung ausübt, wobei die Hülle den den Blindkopf bildenden Abschnitt des Niets nach seiner Verformung vollständig bedeckt, so daß ein Hervortreten von Fasern aus dem Blindkopf verhindert wird.

2. Niet nach Anspruch 1, bei dem die Hülle aus Metall ist.

3. Niet nach Anspruch 1, bei dem die Hülle aus Kunststoff ist.

**Revendications**

1. Rivet aveugle composite pour réunir une paire de pièces (30, 32) de travail ayant des ouvertures alignées, ledit rivet comprenant un corps composite tubulaire, lequel comprend une pluralité de fibres (36) de carbone essentiellement continues et encapsulées dans une matrice en résine déformable par la chaleur, ledit corps tubulaire ayant une tête préformée (12) d'un premier diamètre, une partie (14) de cisaillement d'un deuxième diamètre relativement plus petit que le premier diamètre et reliée à cette tête par un épaulement s'étendant radialement, et une partie (16) formant une tête aveugle, un mandrin (18) s'étendant centralement par rapport audit corps tubulaire et ayant une tige (22) à une extrémité et à l'autre extrémité une enclume (20) recouvrant ladite partie formant la tête aveugle du corps tubulaire, ledit mandrin étant mobile axialement par rapport à la partie (14) de cisaillement et à la tête préformée (R) du corps tubulaire pour former une tête aveugle à cet endroit, et une gaine ductile (34) en une seule pièce ayant une extrémité située en-dessous de l'enclume du mandrin, et une partie tubulaire adaptée pour s'étendre dans les ouvertures dans les pièces de travail et être alignée radialement avec ces ouvertures, la gaine étant déformable, par une compression axiale par l'enclume sur le mandrin, en une configuration agrandie radialement; caractérisé en ce que la partie (16) formant la tête du corps tubulaire a une extrémité d'un troisième diamètre relativement plus petit que le diamètre de la partie (14) de cisaillement, et reliée à la partie de cisaillement par une section tronconique qui converge vers l'enclume sur le mandrin, la gaine ayant une extrémité agrandie radialement et située sous l'enclume du mandrin, la partie tubulaire de la gaine adaptée pour s'étendre dans les ouvertures des pièces de travail étant relativement mince et ayant une extrémité placée sur l'épaulement radial entre la tête (12) et la partie (14) de cisaillement du corps tubulaire, la partie conique, ainsi que l'extrémité agrandie et une partie de la partie tubulaire mince de la gaine pouvant être déformées, sous l'effet de la compression axiale entre l'enclume et l'épaulement radial sur le corps tubulaire, de manière à prendre une configuration tronconique agrandie radialement qui est mise sous contrainte, de façon à exercer une force radiale vers l'intérieur sur la tête déformée en plastique, ladite gaine couvrant complètement la partie formant la tête aveugle du river après déformation à cet endroit, de façon à empêcher que les fibres fassent saillie de la tête aveugle.

2. Rivet en conformité avec la revendication 1, dans lequel ladite gaine est métallique.

3. Rivet en conformité avec la revendication 1, dans lequel la gaine est en plastique.

FIG.1.

FIG.2.

FIG.3.

FIG.4.